# EUROPÄISCHE PATENTSCHRIFT

(11) **EP 0 758 279 B1**
(45) Veröffentlichungstag und Bekanntmachung des Hinweises auf die Patenterteilung: **26.08.1998**
(21) Anmeldenummer: 95915784.3
(22) Anmeldetag: 12.04.1995
(51) Int. Cl.: B23B 27/14, B23B 51/04

(54) **WERKZEUG FÜR DIE SPANENDE BEARBEITUNG**
MACHINING TOOL
OUTIL D'USINAGE

(30) Priorität: 02.05.1994 DE 4415491; 07.09.1994 DE 4431796
(43) Veröffentlichungstag der Anmeldung: 19.02.1997
(73) Patentinhaber: Widia GmbH, 45145 Essen (DE)
(72) Erfinder: HINTZE, Wolfgang, D-45138 Essen (DE); WÜRFELS, Andreas, D-46535 Dinslaken (DE)
(74) Vertreter: Vomberg, Friedhelm, Dipl.-Phys.
(86) Internationale Anmeldenummer: DE9500515
(87) Internationale Veröffentlichungsnummer: WO9529782

(56) Entgegenhaltungen:
- EP-A- 0 088 505
- EP-A- 0 404 744
- DE-A- 3 105 377
- US-A- 4 588 332
- US-A- 4 859 122
- DATABASE WPI Section PQ, Week 9142, 4. Dezember 1991 Derwent Publications Ltd., London, GB; Class P54, AN 91-309265/42 LEOR 'Multi-edge cutting plate ...' & SU,A,1 611 583 (LENGD) 7. Dezember 1990

## Beschreibung

Die Erfindung betrifft ein Werkzeug für die spanende Bearbeitung von Werkstücken, insbesondere einen Schneideinsatz, mit einer Vielzahl von nutförmigen und/oder erhabenen Spanformelementen, die entlang der Schneidkante in einer Reihe nebeneinander angeordnet sind und die eine längliche Erstreckung mit einer hierdurch definierten Längsachse besitzen, wobei die Spanfläche zumindest in Schneidkantennähe eine schuppenförmige Mikrostruktur aufweist und wobei die einzelnen Schuppen unmittelbar nebeneinander angrenzend angeordnet sind. Die Erfindung betrifft ferner ein mit den genannten Schneideinsätzen bestücktes Bohrwerkzeug.

Ein solches Werkzeug wird beispielsweise in der DE 41 18 068 A1 beschrieben. Die dortigen nebeneinanderliegenden Spanformelemente sind unter verschiedenen Winkeln von maximal 45° im Schneideckenbereich bis auf Werte von 0° relativ zur Schneidkantennormalen angeordnet, wodurch unterschiedliche Ablaufrichtungen des Spanes bei Schneidoperationen berücksichtigt werden sollen. Allerdings kann jeweils nur eines der in Eingriff befindlichen Spanformelemente optimal der Spanablaufrichtung angepaßt sein. Bei den übrigen, nicht in Spanablaufrichtung exakt angeordneten Spanformelementen drohen Werkstoffablagerungen und eine erhöhte Reibung, und zwar um so mehr, je mehr die Ausrichtung einzelner Spanformelemente von der tatsächlichen Spanablaufrichtung abweicht. Dies trifft auch für ein Werkzeug nach der DE 41 18 070 A1 zu, dessen Spanformelemente entlang der Schneidkante parallel angeordnet sind.

Die DE 31 05 377 C2 beschreibt einen Schneideinsatz, dessen Spanfläche eine Mehrzahl von im Abstand nebeneinanderliegend herausstehenden Vorsprüngen oder Vertiefungen aufweist, wobei in die Zwischenräume zwischen den Vorsprüngen oder in die Spanfläche mindestens in einer zur Schneidkante parallelen Reihe aneinanderliegend oder nur geringfügig voneinander beabstandet in ihrer Umrißform etwa halbkreisförmige, insbesondere nierenartig ausgebildete Ausmuldungen eingeformt sind. Die Längsachsen der derselben Ausmuldungsreihe zugeordneten Ausmuldungen nimmt eine Parallellage zur zugeordneten Schneidkante ein. Ein dort ablaufender Span erfährt jedoch einen extrem hohen Reibungswiderstand, der ebenfalls zu Ablagerungen von Werkstoffmaterial, also Werkstoffverklebungen und/oder hohen Schneidentemperaturen führen kann. Entsprechendes gilt für die sich von einem Spanflächenplateau in Richtung auf die Schneidkante erstreckenden zungenförmigen Projektionen nach der US-A-5 265 985.

Bei Werkzeugen für die spanende Bearbeitung, insbesondere zum Drehen, Fräsen oder Bohren, die ohne bzw. bei reduziertem Kühlmittel eingesetzt werden und mit denen zähe oder hochlegierte oder gehärtete oder Verbundwerkstoffe bearbeitet werden, soll die Aufgabe gelöst werden, die Kontaktzonenreibung bei unterschiedlichen Spanungsquerschnitten, d.h. bei unterschiedlichen Spanablaufrichtungen und/oder -krümmungen möglichst zu reduzieren, um schädliche Werkstoffverklebungen und -ablagerungen auf der Spanfläche zu reduzieren oder zu vermeiden.

Diese Aufgabe wird durch das Werkzeug nach Anspruch 1 gelöst. Das erfindungsgemäße Werkzeug besitzt auf der Spanfläche zumindest in Schneidkantennähe eine schuppenförmige Mikrostruktur, wobei die einzelnen Schuppen unmittelbar nebeneinander angrenzend angeordnet sind und jeweils einen Querschnitt parallel zu der Schneidkante aufweisen, der eine steile Flanke und eine flache Flanke aufweist, und wobei die Scheitellinien der Schuppen unter verschiedenen Winkeln und/oder Krümmungen verlaufen. Die flache(re) Flanke liegt jeweils auf der den Krümmungsmittelpunkten der Scheitellinien zugewandten Seite. Hierdurch wird erreicht, daß bei jeder Spanungsbreite auf der vom Span überstrichenen Kontaktzone die Winkel der Scheitellinien der Schuppen größer oder gleich dem jeweiligen Spanablaufwinkel und/oder die Krümmungen der Scheitellinien größer oder gleich der jeweiligen Spanseitwärtskrümmung sind. In Verbindung mit den Flankenneigungen reduziert sich der Spankontakt weitgehend auf die flachen Flanken nahe den Scheitellinien, gegebenenfalls kann der Span ungehindert über die Scheitellinien abgleiten. Insbesondere bei Wendeschneidplatten zum Drehen und zum Eckfräsen sind die Scheitellinien der Schuppen gekrümmt und unter veränderlichen Winkeln angeordnet. Bei Schneideinsätzen, die zum Bohren eingesetzt werden, kommt der Krümmung der Scheitellinien eine größere Bedeutung als der Aussrichtung der Schuppen unter verschiedenen Winkeln zu. Die Scheitellinien der Schuppen bilden zur Schneidkante hin mit der Schneidkantennormalen auf der Spanfläche einen Winkel zwischen 55° und -5°.

Weiterbildungen der Erfindung sind in den Unteransprüchen 2 bis 14 beschrieben.

So sind vorzugsweise die Scheitellinien für Dreh- oder FräsSchneideinsätze von der Schneidecke weggerichtet oder - für Bohrer-Schneideinsätze - sind die Krümmungen zur Bohrerachse gerichtet, so daß sie dem Verlauf der tatsächlichen Spanablaufbahn weitgehend nahekommen. Vorzugsweise sind die Krümmungen von der Schneidecke zur Schneidkantenmitte oder zur nächstliegenden Schneidecke hin bzw. von der wirksamen Schneidkantenecke zur benachbarten Schneidkantenecke hin so ausgebildet, daß sie bei Dreh- oder Fräswerkzeugen zunehmende Radien und bei Bohrwerkzeugen (wegen des anders gerichteten Spanablaufs) abnehmende Radien von Schneidecke zu Schneidecke aufweisen. Die Krümmung der Scheitellinie einer einzelnen Schuppe ist vorzugsweise über ihre Längserstreckung konstant, nach einer speziellen Ausführungsform der Erfindung liegt sie zwischen 0,1 mm bis 12 mm nahe einer Schneidecke und wächst bis auf 2 mm bis 60 mm in der Schneidkantenmitte bzw. mit zunehmender Entfernung von der wirksamen Schneidkantenecke. Dies trifft zumindest für einen wesentlichen Anteil der vorhandenen Schuppen zu.

Je nach Schneidoperation beträgt die maximale Höhe der Schuppen, gemessen als Abstand der Scheitellinie zu dem Fußpunkt einer Flanke zwischen 0,01 mm bis 0,25 mm, vorzugsweise zwischen 0,025 und 0,1 mm.

Zur besseren Spanablenkung ist vorgesehen, daß die Höhe der Schuppen mit zunehmendem Abstand von der Schneidkante ansteigt.

Die Scheitellinien der Schuppen bzw. deren Tangenten laufen unter einem Spanwinkel von -10° bis +30° und/oder bilden mit jeweiligen Schneidkantennormalen von der Schneidecke zur Schneidkantenmitte hin abnehmende Winkel von 55° bis -5°.

Nach einer weiteren Ausgestaltung der Erfindung ist die Länge der Schuppen von der Schneidecke zur Schneidkantenmitte oder zur nächsten Schneidecke entlang der Schneidkante bereichsweise oder stetig zunehmend, sie liegt vorzugsweise zwischen 0,15 mm und 8 mm. Die Flanken der Schuppen können im Querschnitt gerade, ballig oder konkav sein, vorzugsweise unter großen Krümmungsradien >0,1 mm für steile Flanken und >1,5 mm für flache Flanken. Die Flanken der Schuppen oder (bei balliger oder konkaver Ausbildung) ihre Tangente verläuft bezogen auf die Schneidkante auf der den Krümmungsmittelpunkten der Scheitellinien abgewandten Seite unter einem steileren Winkel von 45°± 30° und auf der gegenüberliegenden Seite unter einem flacheren Winkel< 15°. Die Übergänge der benachbarten Flanken der Schuppen können an den Scheitellinien scharfkantig oder abgerundet ausgeführt sein.

Insbesondere bei polygonalen Schneideinsätzen mit mehreren Schneidecken, insbesondere bei links- und rechtsschneidenden Wendeschneidplatten ist nach einer weiteren Ausgestaltung der Erfindung vorgesehen, im Schneideckenbereich eine in Richtung der Winkelhalbierenden verlaufende Schuppe anzuordnen, deren Scheitel im Querschnitt senkrecht zu der Winkelhalbierenden mindestens die gleiche Höhe wie die Scheitellinie benachbarter Schuppen aufweist und deren Flankenwinkel (im unterschied zu den benachbarten Schuppen) gleich groß sind, wobei deren Dachwinkel, das ist der von den Flanken gebildete Winkel, 130 bis 175°, vorzugsweise 150 bis 170° beträgt. Der Dachwinkel dieser Schuppe kann mit zunehmendem Abstand von der Schneidecke bereichsweise stetig oder sprunghaft abnehmen.

Die Schuppen können sich bis zur Schneidkante erstrecken oder in die Schneidkante auslaufen, wobei die Schuppenhöhe auf 0 mm sinkt. Alternativ hierzu ist es auch möglich, zwischen der Schneidkanten und den Schuppen eine Fase oder einen Spanformeinlauf vorzusehen, wobei gegebenenfalls die Schuppen auch Teil des Spanformeinlaufes sein können bzw. in diesen übergehen. Schließlich können die Schuppen auch im Bereich einer Fase angeordnet sein.

Vorzugsweise werden Werkzeuge zum Drehen mit positivem oder neutralem Freiwinkel, mit ein- oder doppelseitiger Ausführung, geraden oder gekrümmten Schneiden oder als (rechtwinklige) Fräsplatte ausgebildet.

Die Anzahl der Schuppen liegt zwischen 3 bis 30, vorzugsweise 10 bis 25 pro Schneidkante, wobei die Schuppen zumindest im Bereich der wirksamen Schneidkante, d.h. dem Spanablaufbereich angeordnet sind.

Der vorbeschriebene Erfindungsgedanke kann auch bei solchen Schneideinsätzen realisiert werden, die eine erhabene Mittelfläche, ein sogenanntes Spanflächenplateau aufweisen. Dieses Spanflächenplateau, das die Schneidkantenebene bzw. die durch die Scheitellinien gebildete Spanformebene überragt, besitzt dann vorzugsweise in den schneidkantenzugewandten Bereichen dachseitige Schuppen, die entsprechend den jeweils vorgelagerten, zuvor beschriebenen Schuppen ausgebildet sind, vorzugsweise sich durch eine kürzere Länge hiervon unterscheiden.

Durch die vorbeschriebene Ausgestaltung wird bei einem Fräswerkzeuges erreicht, daß bei jeder Spanungsbreite auf der vom Span überstrichenen Kontaktzone die Winkel der Scheitellinien der Schuppen größer oder gleich dem jeweiligen Spanablaufwinkel und/oder die Krümmungen der Scheitellinien größer oder gleich der jeweiligen Spanseitwärtskrümmung sind. In Verbindung mit den Flankenneigungen reduziert sich der Spankontakt weitgehend auf die flachen Flanken nahe den Scheitellinien, ggf. kann der Span ungehindert über die Scheitellinien abgleiten. Insbesondere beim Eckfräsen sind die Scheitellinien der Schuppen gekrümmt und unter veränderlichen Winkeln angeordnet.

Um das eingangs genannte Fräswerkzeug auch im Hinblick auf die schneideckennahe Gestaltung der Planschneide zu optimieren, d.h., um die Kontaktzonenreibung bei unterschiedlichen Spanungsquerschnitten möglichst zu reduzieren, damit schädliche Werkstoffverklebungen und -ablagerungen auf der Spanfläche vermindert oder vermieden werden können, wird nahe einer Schneidecke auch auf der oder angrenzend an die Planschneide mindestens eine Schuppe mit gleicher Krümmungsrichtung wie die der Schuppen auf der Hauptschneide angeordnet, deren Krümmungen von der Schneidecke weggerichtet sind. Durch diese Ausgestaltung des schneideckennahen Planschneidenabschnittes wird die Spanführung auch in diesem Bereich verbessert. Dies bedeutet bei mehrschneidigen Werkzeugen, daß jeweils bei rechtsschneidenden Fräsplatten von einer Schneidecke aus zunächst die vorbeschriebene Schuppenausbildung aufzufinden ist, zumindest im Bereich der an die aktiv spanende Schneidkante angrenzenden Spanfläche. In den hinteren Bereichen derselben Schneidkante, die nach Drehung der Wendeschneidplatte im Werkzeughalter als Planschneide benutzt werden, ist mindestens eine Schuppe angeordnet, die bezogen auf die zur fernliegenden Schneidecke liegenden Schuppen eine veränderte Ausgestaltung besitzt. Diese Schuppe besitzt eine gleiche Krümmungsrichtung wie die Schuppen der im Anschluß an die nächstliegende Schneidecke folgenden Hauptschneide, deren Krümmungen von der Schneidecke weggerichtet sind.

Vorzugsweise ist der Krümmungsradius der Schuppe(n) auf der Planschneide gleich oder größer den Krümmungsradien der Schuppen, die sich nahe der Schneidecke an der Hauptschneide befinden.

Der Winkel, unter dem die Schuppe in Richtung auf eine Hauptschneidkantennormale in Richtung auf die Planschneide ausläuft, ist vorzugsweise gleich oder kleiner den entsprechenden Winkeln der Schuppen, die sich nahe der Schneidecke an der Hauptschneide befinden. Die schneideckennächste Schuppe oder einzige Schuppe an der Planschneide endet in einem Abstand bzw. läuft in Schneidkantennähe in einem Abstand zweier Vertikalen aus, die bestimmt sind zum einen durch den genannten Schuppenauslauf nahe der Planschneidkante, senkrecht zur Planschneidkante und andererseits durch den Berührungspunkt der Planschneide und der Schneidecke, senkrecht zur Planschneidkante. Der Abstand dieser Vertikalen liegt im Bereich des minimalen Zahnvorschubes, der sich aus dem Vorschub in Millimeter pro Umdrehung, geteilt durch die Anzahl der Schneiden ergibt, und des Produktes von maximaler Zähnezahl und des maximalen Zahnvorschubes. Dieser Abstand liegt vorzugsweise zwischen 0,03 mm und 4 mm. Die Schuppe bzw. die Schuppen laufen auf der Planschneide in einem Abstand zur Planschneidkante aus, der das ein- bis vierfache des Planlauffehlers beträgt, vorzugsweise liegt dieser Abstand im Bereich von 0,01 mm und 0,5 mm.

Insbesondere werden die vorbeschriebenen Schneideinsätze bei Bohrwerkzeugen der im Anspruch 15 beschriebenen Art eingesetzt.

Solche Bohrwerkzeuge sind im Prinzip aus der DE 40 18 043 A1 bekannt. Im Rahmen der vorliegenden Erfindung besitzen diese Bohrwerkzeuge Schneideinsätze der in den Ansprüchen 1 bis 11 beschriebenen Art mit der Maßgabe, daß die Krümmungsradien der Scheitellinien dieser Schneideinsätze zur Bohrerachse hin gerichtet sind, vorzugsweise von der Schneidecke zur benachbarten Schneidecke in radialer Richtung zur Bohrerachse hin abnehmen.

Ausführungsformen des erfindungsgemäßen Werkzeuges werden anhand der Zeichnungen nachfolgend erläutert. Es zeigen:
- Fig. 1: den Spanablauf bei einem erfindungsgemäßen Schneideinsatz,
- Fig. 2: den Spanablauf bei einem Schneideinsatz nach dem Stand der Technik bei einer gleichen Schneidoperation wie dem Werkzeug nach Fig. 1,
- Fig. 3: eine Draufsicht auf ein erfindungsgemäßes Werkzeug,
- Fig. 3a bis 3d: jeweils Schnittansichten entsprechend A-A, B-B, C-C und D-D nach Fig. 3,
- Fig. 3e und 3f: vergrößerte Ansichten der Einzelheit A und B nach Fig. 3a und 3b,
- Fig. 3g und 3h: jeweils vergrößerte Ansichten der Ausschnitte E und F nach Fig. 3,
- Fig. 4a bis 4f: jeweils Schnitteilansichten senkrecht zur Schneidkante erfindungsgemäßer Werkzeuge,
- Fig. 5: jeweils eine Seiten- und Draufsicht auf eine Fräswendeschneidplatten nach der vorliegenden Erfindung,
- Fig. 6 bis 8: erfindungsgemäße Schneidplatten zum Drehen,
- Fig. 9: eine Ansicht eines mit zwei Schneideinsätzen bestückten Bohrwerkzeuges,
- Fig. 10 bis 12: jeweils Draufsichten von zum Bohren geeignete Schneideinsätzen,
- Fig. 13: eine Draufsicht auf ein erfindungsgemäßes Fräswerkzeug und
- Fig. 14: eine Schnittansicht entsprechend dem Schnitt A - A.

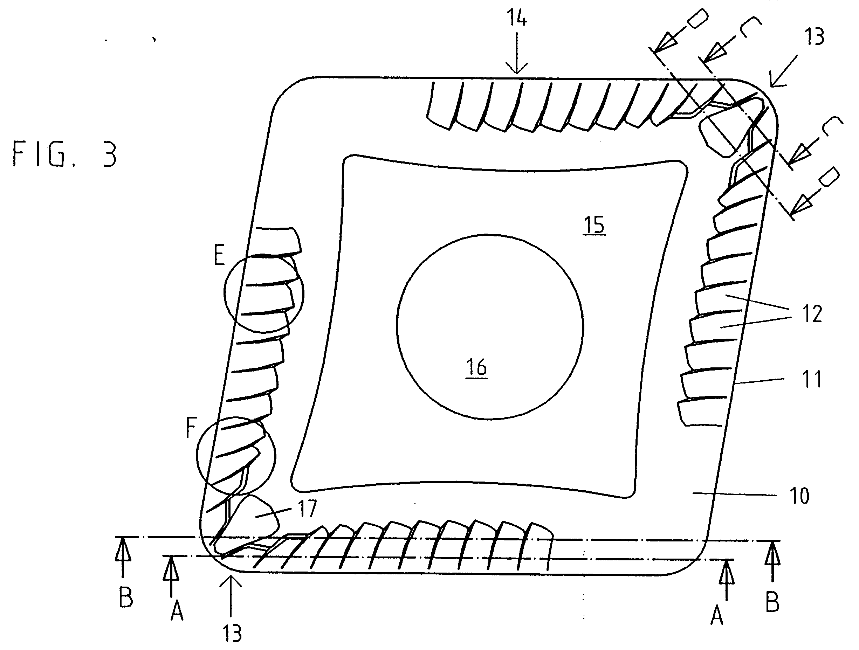

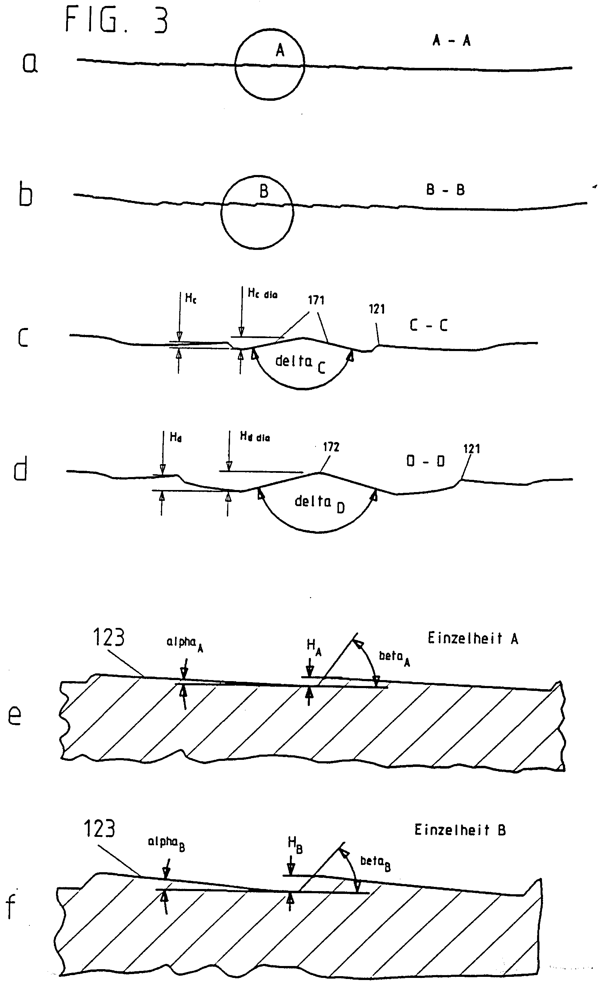

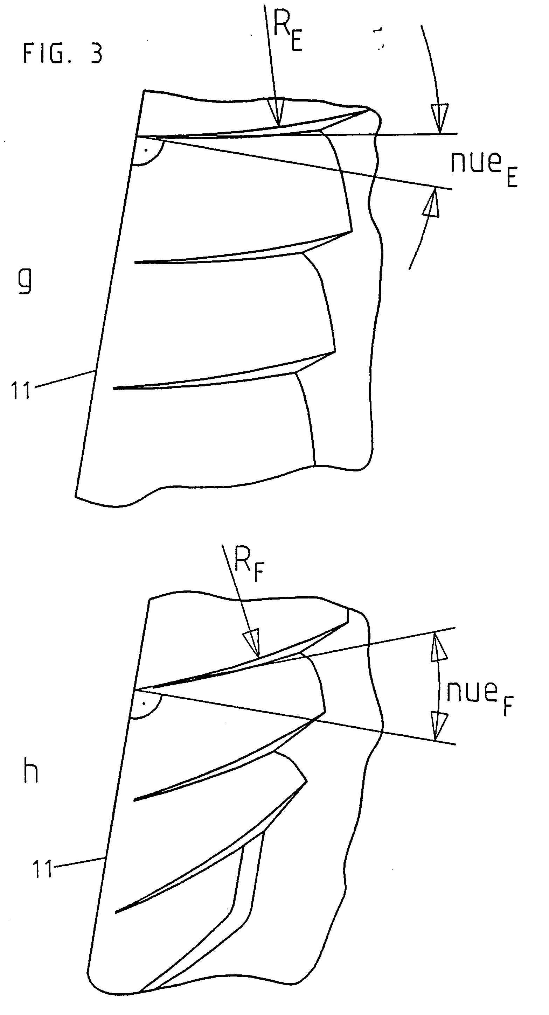

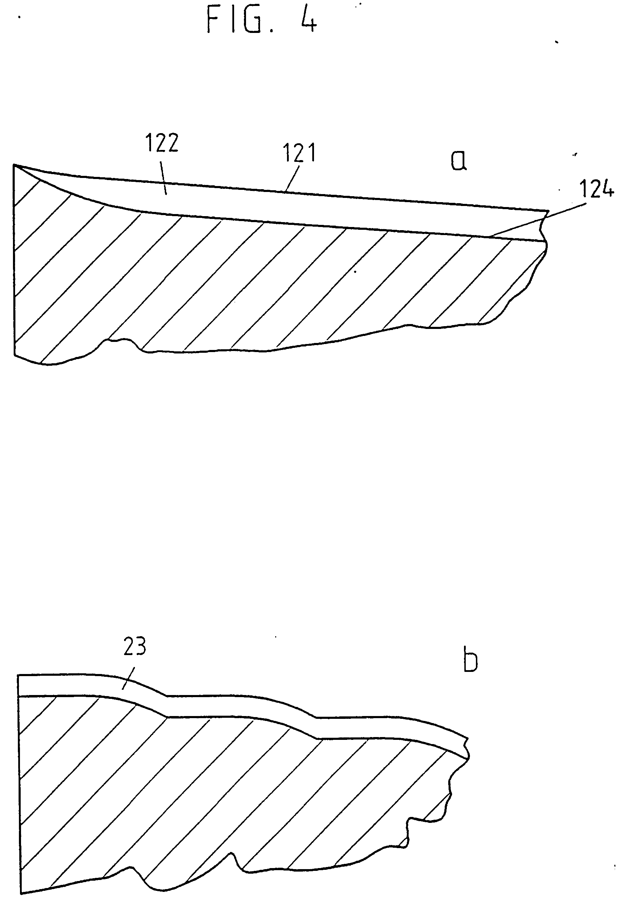

Wie insbesondere Fig. 3 sowie 5b, 6b, 7b und 8b zu entnehmen ist, besitzt die erfindungsgemäße Schneidplatte auf ihrer Spanfläche 10 entlang der Schneidkante 11 jeweils einzelnen aneinanderliegende Schuppen 12, die eine längliche Gestalt haben mit einer Längsachse, die unter verschiedenen Winkeln von der wirksamen Schneidecke 13 zur Schneidkantenmitte 14 hin und darüber hinaus relativ zur Schneidkante angeordnet sind. Bezogen auf jeweilige Schneidkantennormalen sind die betreffenden Winkel in den schneidkanteneckennahen Bereichen größer und werden zur Schneidkantenmitte hin kleiner, gegebenenfalls 0 oder nehmen negative Werte an. Zusätzlich zu unterschiedlicher Winkelstellung sind die Schuppen 12 auch dergestalt ausgebildet, daß ihre jeweiligen Flanken von der Schneidkante aus gesehen entlang ihrer Längsrichtung bogenförmig gekrümmt sind. Bei jeder Schuppe 12 kann die Krümmung entlang der Längsrichtung an verschiedenen Stellen verschieden groß oder über die gesamte Länge konstant sein. In dem in Fig. 3 dargestellten Fall nimmt die Krümmung zu schneidkantenferneren Bereichen leicht zu. Der Schneideinsatz 10 kann - wie in Fig. 3 angedeutet - ein mittleres Plateau 15 oder eine mittlere Vertiefung aufweisen. Der Schneideinsatz kann mit oder ohne Befestigungsloch 16 ausgebildet sein.

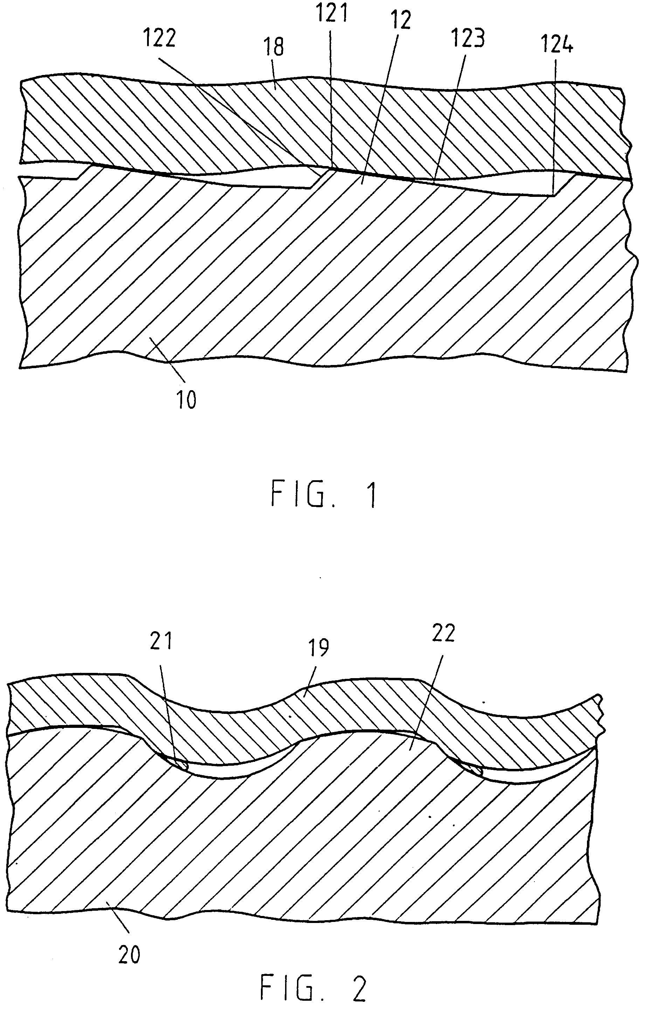

Fig. 1 sowie 3a, e und f zeigen jeweilige Schuppen 12, die einen Scheitelpunkt 121 aufweisen als Grenzlinie zwischen einer steileren Flanke 122 und einer flacheren Flanke 123, wobei die steilere Flanke 122 auf der dem Krümmungsmittelpunkt der Scheitellinien abgewandten Seite liegt.

Die Flanke kann entweder eben oder leicht konvex oder konkav (also ballig) ausgebildet sein. Ebenso kann die Scheitellinie 121 kantig oder abgerundet ausgeführt werden; entspechendes gilt für die Übergänge 124 von der flacher laufenden Flanke 123 zu der steiler laufenden Flanke 122. Schließlich zeigen die jeweiligen vergrößerten Schnittansichten nach Fig. 3e und f, daß die Flanken unterschiedliche Winkel von schneidkantennahen Bereichen zu schneidkantenfernen Bereich einnehmen können. Im vorliegenden Fall nimmt der Winkel α der flacheren Flanke 123 zu schneidkantenferneren Bereichen zu, während der Winkel β der steileren Flanke 122 etwa gleich bleibt. In jedem Falle ist der Winkel β über die gesamte Länge der Schuppe jeweils größer.

Entsprechend der Ausbildung nach Fig. 3 besitzen die einzelnen Schuppen 12 auch zu schneidkantenferneren Bereichen hin ein größere Höhe, d.h. einen größeren Abstand der Scheitellinie 121 zum Fußpunkt 124 (vgl. auch Größen H_{A} und H_{B} in Fig. 3e und f.

Zusätzlich besitzt der Schneideinsatz in der Schneidecke 13 ein in bezug auf eine dortige Winkelhalbierende spiegelsymmetrisch ausgebildetes erhabenes Spanformelement, wobei die betreffende Schuppe 17 sich zur Spanflächenmitte hin konisch verbreitert. Die Schuppe 17, die entlang der Schnitte C-C und D-D in Fig. 3c und d dargestellt ist, besitzt zwei symmetrische Flanken 171, die einen Winkel zwischen 150 und 170° einnehmen. Dieser Winkel ist im schneidkantennäheren Bereich kleiner als im schneidkantenferneren Bereich. Die Scheitellinie 172 überragt in jedem Falle die Scheitellinien 121 benachbarter Schuppen 12. Der Schneideinsatz nach Fig. 3 besitzt entlang jeder Schneidkante jeweils elf Schuppen 12, die von der Schneidecke 13 hin über die Schneidkante 14 hinaus reichen.

Die Wirkung des erfindungsgemäßen Schneideinsatzes 10 läßt sich anhand der Fig. 1 deutlich erkennen. Der ablaufende Span 18 wird sanft über die flacher verlaufende Flanke 123 geführt, kommt also mit scharfkantigen steilen Flanken nicht in Berührung. Im Unterschied hierzu sind bei dem nach dem Stand der Technik bekannten Schneideinsatz 20, der senkrecht oder unter verschiedenen Winkeln zur Schneidkante gerichtete Längsrippen aufweist, beim ablaufenden Span 19 erhebliche Reibungen zu überwinden, die zu einer Werkstückverklebung bzw. Ablagerungen 21 führen (Fig. 2). Dies liegt daran, daß auch bei einer Ausführung, bei der die Längsrippen unterschiedliche Richtungen zur Schneidkante haben, stets nur eine Längsrippe in Spanablaufrichtung liegt, während bei allen übrigen Rippen 22 Bewegungskomponenten beim ablaufenden Span 21 vorliegen, die quer zur Längsrichtung der betreffenden Rippe liegen.

Wie insbesondere Fig. 3g und h zeigen, sind die Krümmungen der Scheitellinien 121 jeweils gleichgerichtet, wobei sie von der Schneidecke aus zur Schneidkantenmitte hin abnehmen. Bei einer angenommen teilkreisförmigen Ausbildung steigen die Krümmungsradien von 0,1 bis 12 mm nahe der Schneidecke 13 auf 2 bis 60 mm in der Schneidenmitte. Dies gilt für Dreh- und Fräswerkzeuge. Für den Schneideinsatz nach Fig. 3 ist die entsprechende Radiusveränderung aus Fig. 3g, welche die Einzelheit E zeigt, gegenüber der Darstellung nach Fig. 3h, die die Einzelheit F zeigt, deutlich zu erkennen. Mit den sich verändernden Krümmungsradien nimmt auch der Winkel nue vom schneideckennahen Bereich zum schneideckenferneren Bereich ab.

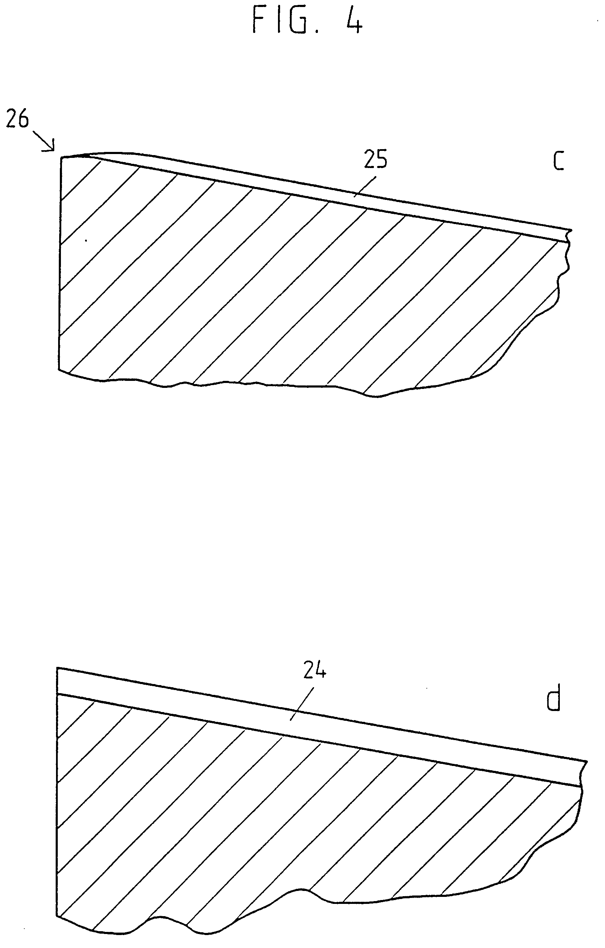

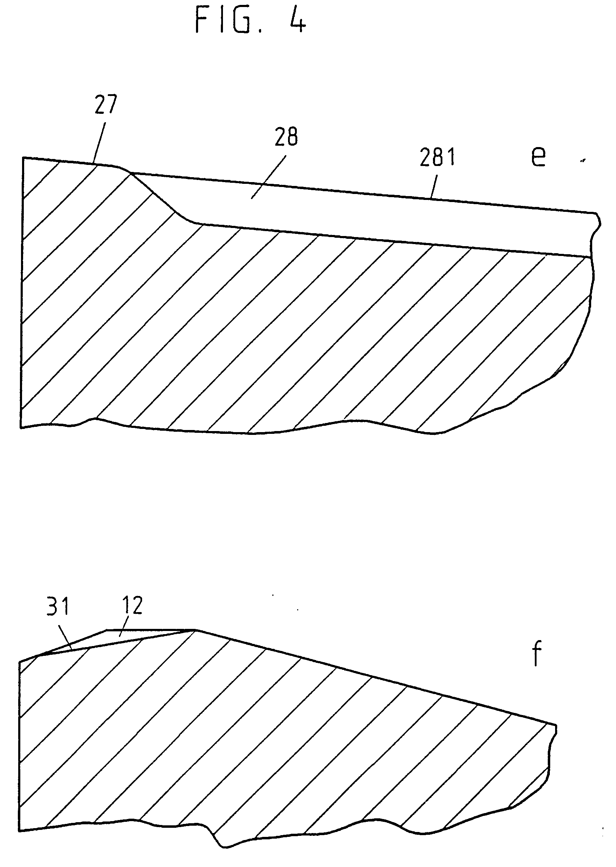

Fig. 4a zeigt einen Querschnitt etwa vertikal zur Schneidkante, wobei die Flanke 122, die Scheitellinie 121 sowie die Übergangslinie von der Flanke 122 zur benachbarten Flanke 123, die Linie 124, sichtbar sind. Bei der Ausführungsform nach Fig. 4a sind die Schuppen 12 bis zur Schneidkante reichend durchgezogen und bilden den Spanformeinlauf. Bei den Ausführungsformen nach Fig. 4b und d reichen die Schuppen 23 und 24 bis zur Schneide, wobei die Schuppen 23 im Querschnitt senkrecht zur Schneidkante bogenförmig verlaufen und einzelne Stufen bzw. Knickpunkte bilden. Die Spanflächenebene ist mit wachsender Entfernung von der Schneidkante gegenüber dieser abgesenkt. Der Verlauf der Schuppen 24 nach Fig. 4d ist hingegen linear abfallend, d.h., unter einem konstanten Spanwinkel gegenüber der Freifläche.

Bei der Ausführungsform nach Fig. 4c sind die Schuppen 25 so ausgeführt, daß sie zur Schneidkante 26 auslaufen, d.h., ihre Höhe verringert sich auf 0. Die Spanfläche ist senkrecht zur Schneidkante 26 zunächst ansteigend ausgebildet, fällt jedoch in schneidkantenferneren Bereichen linear ab. Der Schneideinsatz nach Fig. 4e besitzt eine Fase 27, in deren Anschluß die Schuppenausbildung 28 realisiert ist. Die Schuppenscheitellinien 281 liegen geringfügig unterhalb der durch die Fase 27 bestimmten Ebene. Fig. 4f zeigt einen Schneideinsatz, bei dem die Schuppen 12 im Bereich einer Fase 31 liegen. Die in Fig. 4f dargestellte Schneidplatte ist insbesondere aus einem hochfesten Werkstoff hergestellt und zur Bearbeitung extrem harter Werkstücke geeignet.

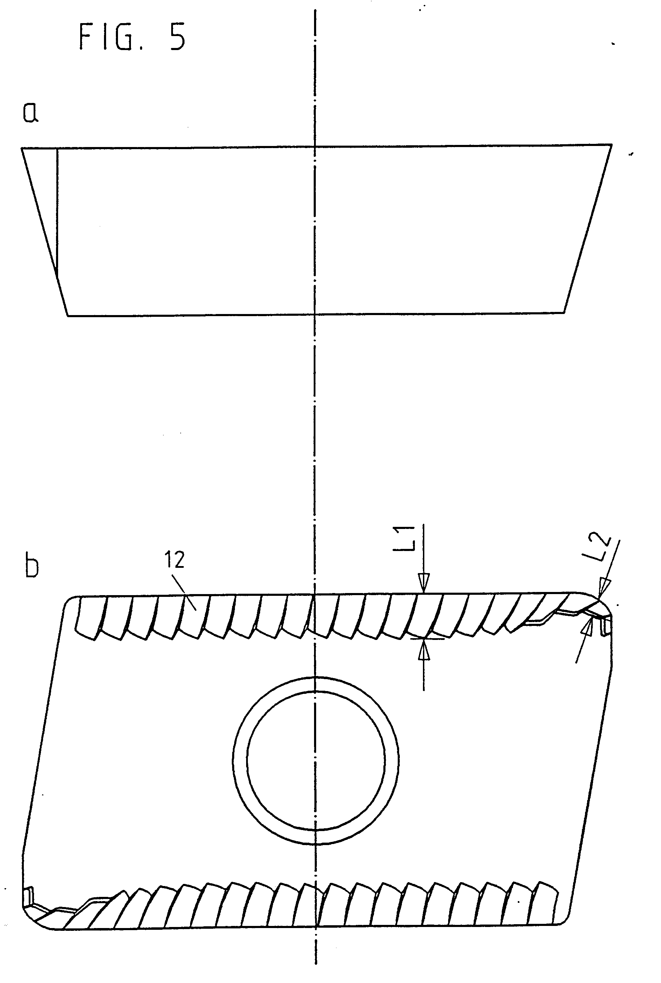

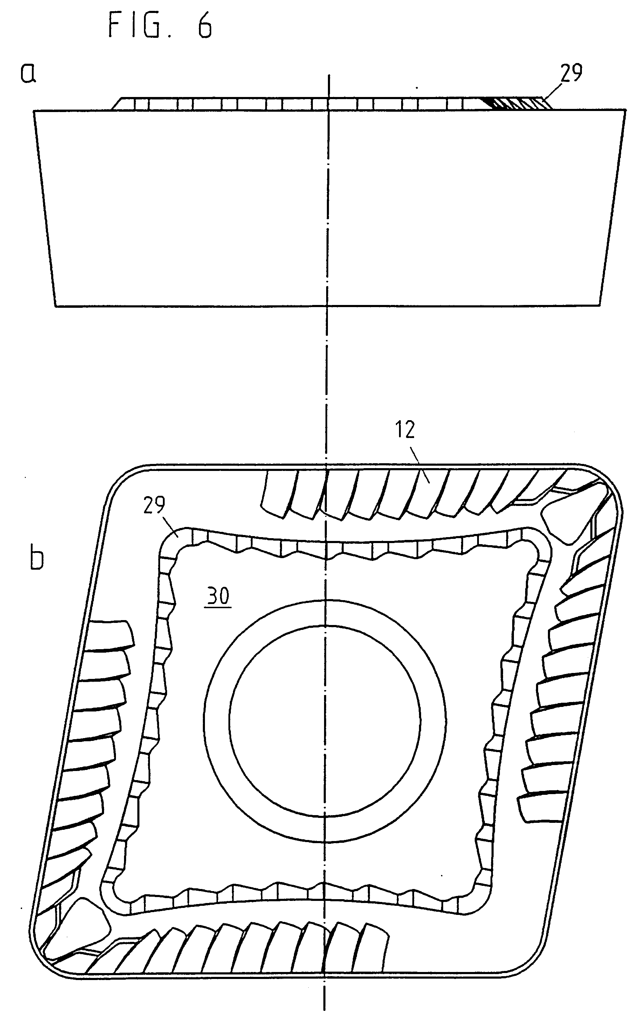

Fig. 5 zeigt eine Fräswendeschneidplatte, Fig. 6 bis 8 zeigen Wendeschneidplatten zum Drehen.

Die Wendeschneidplatte nach Fig. 5 besitzt eine im wesentlichen rhombische Gestalt in einer Draufsicht, wobei sich von der jeweiligen einen spitzen Winkel einschließenden Schneidecke entlang der längeren Schneidkante Schuppen erstrecken, die in der Schneidecke eine Länge L₂ haben, die auf eine größere Länge L₁ anwächst und etwa nach einem Drittel der Schneidkante in entfernteren Bereichen von der wirksamen Schneidecke in etwa konstant bleibt. Im übrigen sind die Schuppen nach Fig. 5 so ausgebildet wie zu Fig. 2 und 3 beschrieben.

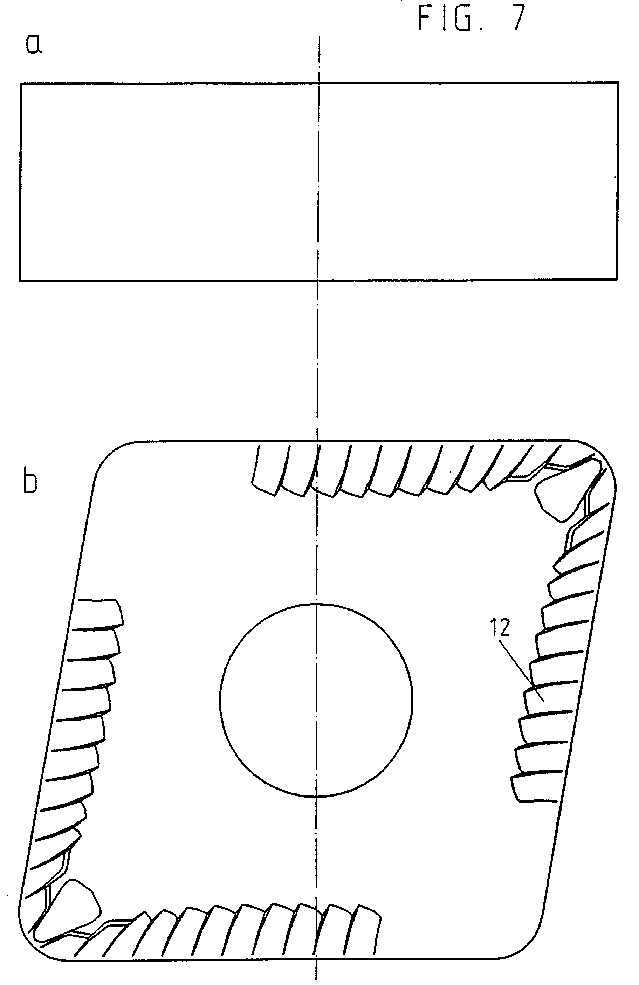

Die Wendeschneidplatte nach Fig. 6 ist ebenfalls rhombisch und besitzt vier etwa gleich lange Schneidkanten. Jeweils zu beiden Seiten von einer Schneidecke, die den spitzen Winkel einschließt, ausgehend erstrecken sich Schuppen, die bis über die betreffende Schneidkantenmitte hinausragen, wie dies auch zu der Ausführungsform nach Fig. 3 beschrieben ist. Zusätzlich besitzt der Schneideinsatz weitere Schuppen 29 auf dem mittleren Spanflächenplateau 30. Diese Schuppen 29 besitzen jedoch eine wesentlich kürzere Länge als die an die Schneidkante oder eine dortige Fase angrenzenden Schuppen 12. Wie in Fig. 6a dargestellt, kann der Freiwinkel der erfindungsgemäßen Schneidplatten positiv oder 0° sein, entsprechend Fig. 7a.

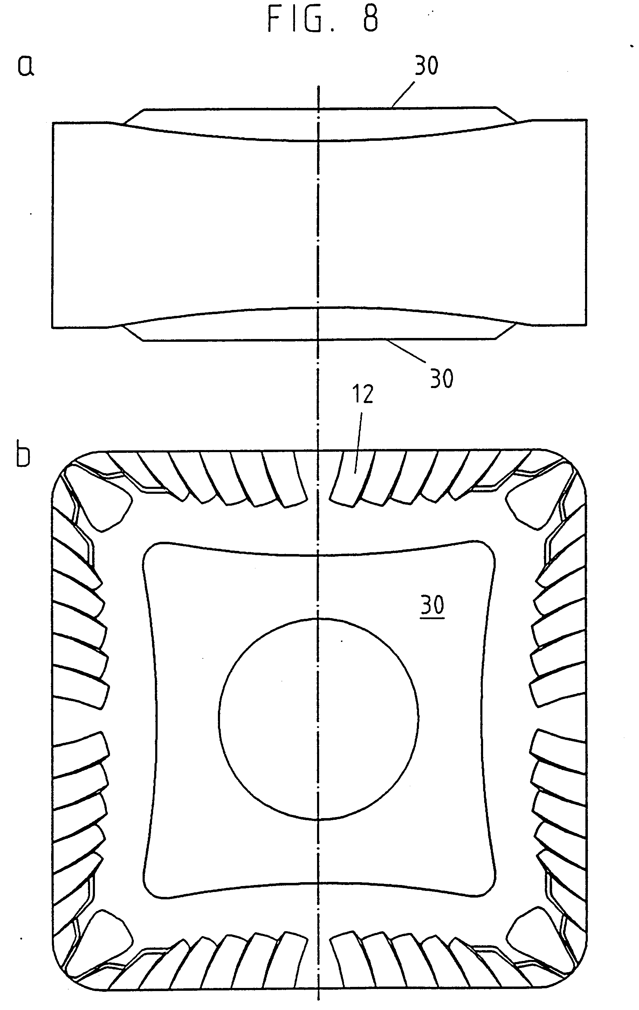

Die Wendeschneidplatte nach Fig. 8 ist quadratisch ausgebildet und besitzt einen Freiwinkel von 0°.

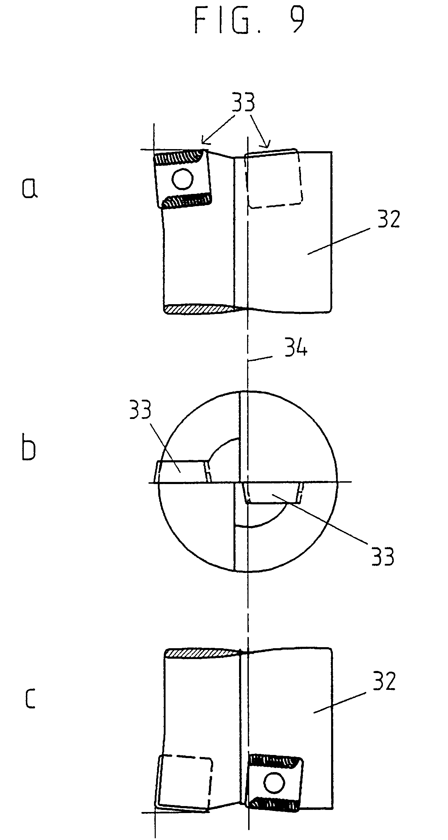

Fig. 9a zeigt ein rechtssdrehendes Bohrwerkzeug in der Draufsicht der Außenschnmeide, Fig. 9b dieses Bohrwerkzeug in einer stirnseitigen Draufsicht und Fig. 9c ein rechtsdrehendes Bohrwerkzeug in der Draufsicht auf die Innenschneide. Bohrwerkzeuge dieser Art werden für Bohrungen in Metallvollmaterial eingesetzt und besitzen einen Schaft 32 und mehrere, im vorliegenden Fall zwei, an der Stirnseite des Schaftes in verschiedenem Radialabstand und um 180° gegeneinander versetzt zueinander angeordnete geometrisch ähnliche Schneideinsätze 33, deren Arbeitsbereiche sich überdecken und von denen die radial innere Wendeschneidplatte mit ihrer einen in Eingriff stehenden Schneidkante die Bohrerachse 34 geringfügig überschreitet. Ein solcher Bohrer ist beispielsweise in der DE 40 18 043 A1 beschrieben, worauf ausdrücklich Bezug genommen wird. Anstelle der dort beschriebenen Schneideinsätze mit zwei benachbarten jeweils in stumpfem Winkel zueinander geneigten Schneidkanten können auch, wie in Fig. 9a, c dargestellt, rechteckige bzw. rhombische Schneideinsätze eingesetzt werden.

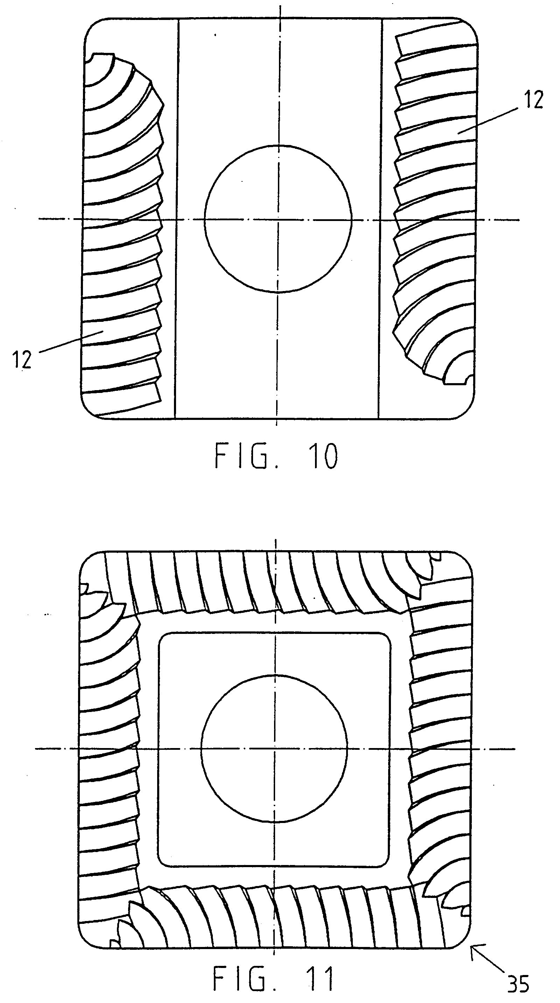

Solche Schneideinsätze sind beispielsweise in Fig. 10 und 11 dargestellt. Fig. 10 zeigt eine quadratische Schneidplatte in zweischneidiger Ausführung, d.h., jeweils gegenüberliegende Seiten besitzen eine schuppenförmige Mikrostruktur. Fig. 11 zeigt eine entsprechende Schneidplatte in vierschneidiger Ausführung, bei dieser Ausführungsform durchdringen sich die Schuppen in den Schneidecken 35.

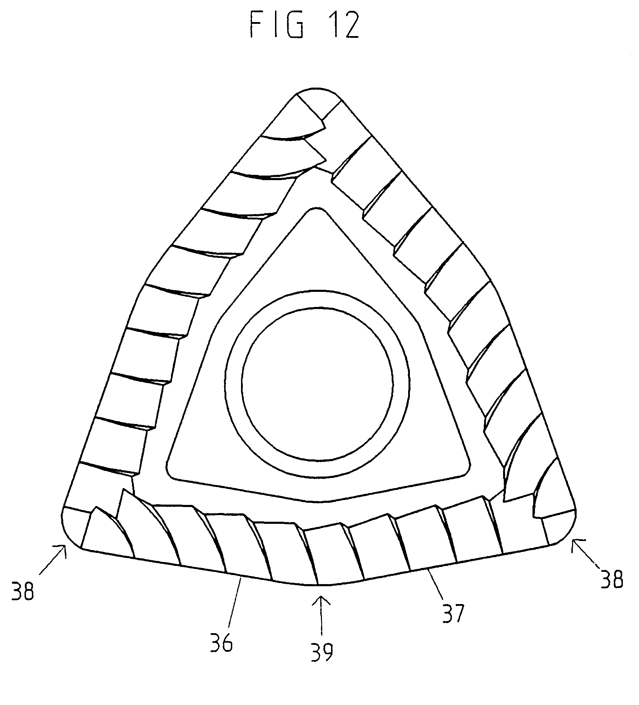

Fig. 12 zeigt eine trigonförmige Wendeschneidplatte, bei der beim Bohren zwei Schneidenabschnitte 36 und 37 einer Schneidkante zwischen benachbarten spitzen Schneidecken 38 im Eingriff stehen. Der entstehende Span überstreicht die dazwischenliegende stumpfe Schneidecke 39. Bei dieser Ausführungsform nehmen die Krümmungsradien der Scheitellinien von der spitzen Schneidecke 38 zu der benachbarten spitzen Schneidecke ab.

Wie Fig. 13 zu entnehmen ist, besitzt das erfindungsgemäße Fräswerkzeug - hier als quadratische Schneidplatte dargestellt - auf seiner Spanfläche 10 entlang der (Haupt-)Schneidkante 11 jeweils einzelne aneinanderliegende Schuppen 12, die eine längliche Gestalt haben und eine Längsachse besitzen, die unter verschiedenen Winkeln von der wirksamen Schneidecke 13 zur Schneidkantenmitte hin und darüber hinaus relativ zur Schneidkante angeordnet sind. Bezogen auf jeweilige Schneidkantennormalen sind die betreffenden Winkel in den schneidkanteneckennahen Bereichen größer und werden zur Schneidkantenmitte hin kleiner. Die Schuppen 12 sind an ihren jeweiligen Flanken von der Schneidkante aus gesehen entlang ihrer Längsrichtung bogenförmig gekrümmt, wobei die Krümmung zu schneidkantenferneren Bereichen zunehmen kann oder über die gesamte Länge konstant ist. Der Schneideinsatz kann mit oder ohne Befestigungsloch 16 ausgebildet sein.

Bei der abgebildeten rechtsschneidenden Fräsplatte sind die Krümmungen von der Schneidecke 13 entlang der Hauptschneide 11 weggerichtet.

Zusätzlich besitzt die vorliegende Fräsplatte noch im Bereich der Planschneide 11a mindestens eine weitere Schuppe 12a mit der gleichen Krümmungsrichtung wie die Schuppen 12b auf der Hauptschneide. Die Krümmung mit einem Krümmungsradius R_{PS} dieser Schuppe 12a auf der Planschneide 11a ist mindestens genauso groß wie der Krümmungsradius der Schuppen 12b auf der Hauptschneide nahe der Schneidecke. Der Winkel nue_{PS} der Schuppen 12a, gebildet durch eine Tangente an den Schuppenauslauf in Richtung der Schneidkante 11a, ist höchstens so groß wie der betreffende Winkel der Schuppen 12b, unter dem diese gegenüber der Hauptschneidkantennormalen 11 auslaufen. Die Planschneide 11a beginnt am Punkt E_{PS}, wo die Schneidecke 13, die durch einen entsprechenden Eckenradius definiert ist, endet und in die geradlinige Schneidkante 11a übergeht, die sich in schneideckenferneren Bereichen zur Schneide 11 fortsetzt. Der Abstand des Punktes E_{PS} zum Punkt, an dem die Schuppe 12a in Richtung auf die Planschneide 11a ausläuft, wird mit c bezeichnet. Dieser Abstand liegt zwischen 0,03 mm und 4 mm. Relativ zur Schneidkante 11a läuft die Schuppe 12a in einem Abstand d aus, der im Bereich von 0,01 mm und 0,5 mm liegt. Im vorliegenden Ausführungsbeispiel ist nur eine Schuppe 12a vorgesehen, es können sich jedoch hier zwei oder mehr Schuppen gleicher Krümmungen anschließen.

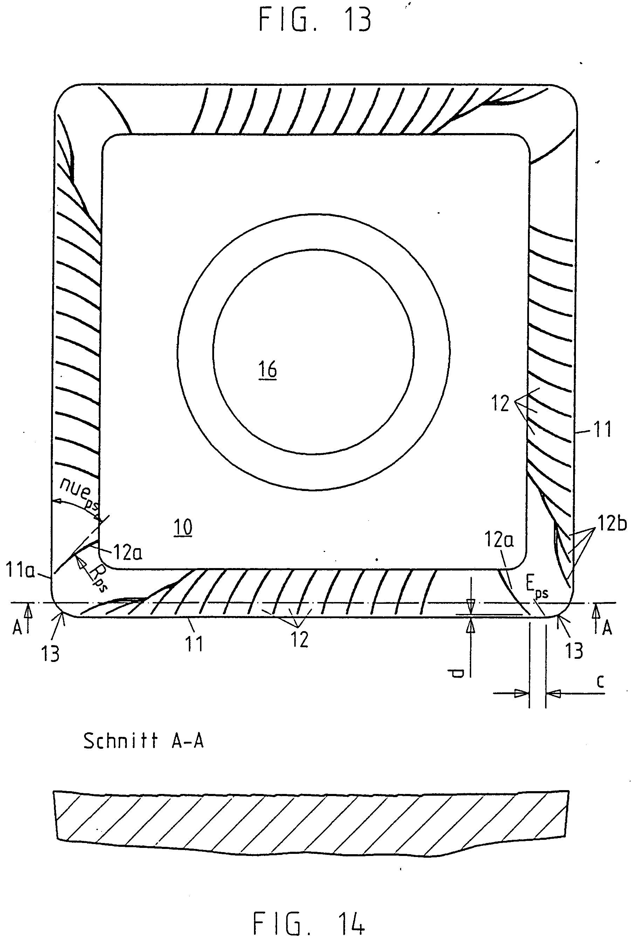

Fig. 14 stellt einen Schnitt A - A nach Fig. 13 dar, der zeigt, daß die einzelnen Schuppen 12 (sowie ggf. die Schuppen 12a) unmittelbar aneinander angrenzen.

## Patentansprüche

1. Werkzeug für die spanende Bearbeitung von Werkstücken, insbesondere Schneideinsatz, mit einer Vielzahl von nutförmigen und/oder erhabenen Spanformelementen, die entlang der Schneidkante (11) und in einer Reihe nebeneinander angeordnet sind und die eine längliche Erstreckung mit einer hierdurch definierten Längsachse besitzen, wobei die Spanfläche zumindest in Schneidkantennähe eine schuppenförmige Mikrostruktur aufweist und wobei die einzelnen Schuppen (12, 23 bis 25) unmittelbar nebeneinander angrenzend angeordnet sind,
**dadurch gekennzeichnet**,
daß die Schuppen (12, 23 bis 25) kammartige, gekrümmte Scheitellinien (121) aufweisen, die zur Schneidkante (11) hin mit der Schneidkantennormalen auf der Spanfläche einen Winkel (nᵤₑ) zwischen 55° und -5° bilden, daß die Schuppen (12, 23 bis 25) jeweils einen Querschnitt parallel zu der Schneidkante aufweisen, der eine steilere Flanke (122) und eine flachere Flanke (123) aufweist, und daß die flachere Flanke (123) jeweils auf der dem Krümmungsmittel punkt zugewandten Seite liegt.

2. Werkzeug nach Anspruch 1, dadurch gekennzeichnet, daß die Krümmungen der Scheitellinien (121) für Dreh- und Fräs-Schneideinsätze von der Schneidecke (13) weggerichtet sind oder - für Bohrer-Schneideinsätze - die Krümmungen zur Bohrerachse gerichtet sind und/oder daß die Krümmungen von der Schneidecke (13) zur Schneidkantenmitte (14) oder zur nächstliegenden Schneidecke hin zunehmende Radien (für Dreh- oder Fräswerkzeuge) oder abnehmende Radien von Schneidecke zu Schneidecke (für Bohrwerkzeuge) aufweisen, wobei die Krümmung der Scheitellinie (121) jeder einzelnen Schuppe (12) zumindest bei einer wesentlichen Anzahl von Schuppen (12) über ihre Längserstreckung konstant ist, vorzugsweise zwischen 0,1 mm bis 12 mm nahe einer Schneidecke (13) bis auf 2 mm bis 60 mm ansteigend in der Schneidkantenmitte (14) betragen.

3. Werkzeug nach einem der Ansprüche 1 oder 2, dadurch gekennzeichnet, daß die maximale Höhe H_{A, B} der Schuppen (12), gemessen als Abstand der Scheitellinie (121) zu dem Fußpunkt (124) einer Flanke (122, 123) zwischen 0,01 mm bis 0,25 mm, vorzugsweise zwischen 0,025 mm und 0,1 mm, liegt und/oder die Höhe der Schuppen (12) mit zunehmendem Abstand von der Schneidkante (13) ansteigt.

4. Werkzeug nach einem der Ansprüche 1 bis 3, dadurch gekennzeichnet, daß die Scheitellinien (121) der Schuppen (12) unter einem Spanwinkel von -10° bis +30° verlaufen und/oder mit jeweiligen Schneidkantennormalen von der Schneidecke (13) zur Schneidkantenmitte (14) hin abnehmende Winkel von 55° bis -5°, bilden.

5. Werkzeug nach einem der Ansprüche 1 bis 4, dadurch gekennzeichnet, daß die Länge der Schuppen (12) von der Schneidecke (13) zur Schneidkantenmitte (14) oder zur nächsten Schneidecke entlang einer Schneidkante (11) bereichsweise oder stetig zunimmt, wobei vorzugsweise die Länge zwischen 0,15 mm und 8 mm liegt.

6. Werkzeug nach einem der Ansprüche 1 bis 5, dadurch gekennzeichnet, daß die Flanken (122, 123) der Schuppen im Querschnitt gerade, ballig oder konkav sind, vorzugsweise unter Krümmungsradien >0,1 mm für steile Flanken und >1,5 mm für flache Flanken und/oder daß die Flanken (122, 123) der Schuppen (12) oder ihre Tangente bezogen auf die Schneidkante (11) auf der den Krümmungsmittelpunkten der Scheitellinien abgewandten Seite unter einem steileren Winkel von 45° ± 30° und auf der gegenüberliegenden Seite unter einem flacheren Winkel <15° verlaufen.

7. Werkzeug nach einem der Ansprüche 1 bis 6, dadurch gekennzeichnet, daß die Übergänge der benachbarten Flanken (122, 123) der Schuppen (12) an der Scheitellinie (121) scharfkantig oder abgerundet sind.

8. Werkzeug nach einem der Ansprüche 1 bis 7, dadurch gekennzeichnet, daß im Schneideckenbereich eine in Richtung der Winkelhalbierenden verlaufende Schuppe (17) angeordnet ist, deren Scheitel (172) im Querschnitt senkrecht zu der Winkelhalbierenden mindestens die gleiche Höhe wie die Scheitellinien (121) benachbarter Schuppen (12) aufweist und deren Flankenwinkel gleich groß sind, wobei deren Dachwinkel (δ) 130° bis 175°, vorzugsweise 150° bis 170° beträgt und/oder daß der Dachwinkel (δ) der Schuppe (17) mit zunehmendem Abstand von der Schneidecke (13) bereichsweise stetig oder sprunghaft abnimmt.

9. Werkzeug nach einem der Ansprüche 1 bis 8, dadurch gekennzeichnet, daß die Schuppen (12, 17, 23 bis 25) sich bis zur Schneidkante erstrecken oder in die Schneidkante (11) auslaufen, wobei die Schuppenhöhe auf 0 mm sinkt oder daß zwischen der Schneidkante (11) und den Schuppen (28) eine Fase (27) oder ein Spanformeinlauf vorgesehen ist oder die Schuppen im Bereich einer Fase ( 31 ) angeordnet sind.

10. Werkzeug nach einem der Ansprüche 1 bis 9, dadurch gekennzeichnet, daß auf einem sich über den schneidkantennahen Spanflächenbereich erhabenen Spanflächenplateau weitere Schuppen (19) angeordnet sind, deren Längen vorzugsweise kleiner als die der schneidkantennahen Schuppen (12) sind.

11. Werkzeug nach einem der Ansprüche 1 bis 10, dadurch gekennzeichnet, daß die Schuppen im wesentlichen aus abschnittsweisen ebenen Flächen bestehen.

12. Werkzeug nach einem der Ansprüche 1 bis 11, dadurch gekennzeichnet, daß nahe einer Schneidecke (13) auch auf der oder angrenzend an die Planschneide (11a) mindestens eine Schuppe (12a) mit gleicher Krümmungsrichtung wie die der Schuppen (12) auf der Hauptschneide (11) angeordnet ist, deren Krümmungen von der Schneidecke (13) weggerichtet sind, wobei vorzugsweise der Krümmungsradius (R_{PS}) der Schuppe(n) (12a) auf der Planschneide (11a) gleich oder größer den Krümmungsradien der Schuppen (12b) ist (sind), die sich nahe der Schneidecke (13) an der Hauptschneide (11) befinden und/oder der Winkel (nue_{PS}) der Schuppe(n) (12a) auf der Planschneide (11a) gleich oder kleiner den Winkeln der Schuppen (12b) ist (sind), die sich nahe der Schneidecke (13) an der Hauptschneide (11) befinden.

13. Werkzeug nach Anspruch 12, dadurch gekennzeichnet, daß die schneideckennächste Schuppe (12a) auf der Planschneide (11a) in einem Abstand (c) in der Schneidkantennähe auslaufen, gemessen als Abstand einer ersten Vertikalen, die durch den Schuppenauslauf nahe der Planschneidkante (11a) und senkrecht hierzu verläuft, und einer zweiten Vertikalen, die durch den Berührungspunkt (E_{PS}) der Planschneide (11a) und der Schneidecke (13) senkrecht zur Planschneidkante verläuft, wobei der Abstand (c) im Bereich des minimalen Zahnvorschubes (f_{zmin}) und des Produktes von maximaler Zähnezahl und des maximalen Zahnvorschubes (zₘₐₓ . f_{zmax}) liegt, vorzugsweise zwischen 0,03 mm ≤ c ≤ 4 mm.

14. Werkzeug nach einem der Ansprüche 12 oder 13, dadurch gekennzeichnet, daß die Schuppe(n) (12a) auf der Planschneide (11a) in einem Abstand (d) zur Planschneidkante (11a) ausläuft (auslaufen), der das ein- bis vierfache des Planlauffehlers beträgt, vorzugsweise im Bereich 0,01 mm ≤ d ≤ 0,5 mm liegt.

15. Bohrwerkzeug für Bohrungen in Metallvollmaterial, mit einem Schaft (32) und mehreren an der Stirnseite des Schaftes (32) in verschiedenem Radialabstand und um gleiche Umfangswinkel gegeneinander versetzt zueinander angeordnete, geometrisch ähnliche Wendeschneidplatten (33), deren Arbeitsbereiche sich überdecken, wobei die radial innere Wendeschneidplatte mit ihrer einen in Eingriff stehenden Schneidkante die Bohrerachse (34) geringfügig überschreitet, dadurch gekennzeichnet, daß die radial innere Wendeschneidplatte mit einer Vielzahl von nutförmigen und/oder erhabenen Spanformelementen, die entlang der Schneidkante (11) und in einer Reihe nebeneinander angeordnet sind und die eine längliche Erstreckung mit einer hierdurch definierten Längsachse besitzen, wobei die Spanfläche zumindest in Schneidkantennähe eine schuppenförmige Mikrostruktur aufweist und wobei die einzelnen Schuppen (12, 23 bis 25) unmittelbar nebeneinander angrenzend angeordnet sind und kammartige, gekrümmte Scheitellinien (121) aufweisen, die zur Schneidkante (11) hin mit der Schneidkantennormalen auf der Spanfläche einen Winkel (nᵤₑ) zwischen 55° und -5° bilden, wobei die Schuppen jeweils einen Querschnitt parallel zu der Schneidkante (11) aufweisen, der eine steilere Flanke (122) und eine flachere Flanke (123) aufweist und die flachere Flanke (123) jeweils auf der dem Krümmungsmittelpunkt zugewandten Seite liegt.

## Claims

1. Tool for material-removing machining of workpieces, in particular a cutting insert, having a plurality of recessed and/or raised chip-forming elements which are disposed along the cutting edge (11) and adjacent in a row and which have an elongated extension with a longitudinal axis defined thereby, whereby the cutting surface having at least near the cutting edge an imbricated microstructure and whereby the individual scales (12, 23 to 25) being arranged immediately adjacent one another,
**characterised in that**
the scales (12, 23 to 25) have comb-like curved apex lines (121) which form an angle (nᵤₑ) between 55° and -5° towards the cutting edge (11) relative to a perpendicular to the cutting edge on the cutting surface, that the scales (12, 23 to 25) each have parallel to the cutting edge a cross-section which has a steeper flank (122) and a flatter flank (123), and that the flatter flank (123) lies on the side turned toward the center of curvature.

2. Tool according to claim 1 characterised in that the curvatures of the apex lines (121) for turning and milling cutting inserts are directed away from the cutting corner (13) or - for boring cutting inserts - the curvatures are directed at the drill axis and/or that the curvatures have from the cutting corner (13) to the cutting-edge center (14) or to the next cutting corner increasing radii (for turning or milling tools) or decreasing radii from cutting corner to cutting corner (for boring tools), whereby the curvature of the apex line (121) of each individual scale (12) when there is a substantial number of scales (12) is constant over its length, preferably between 0,1 mm and 12 mm near a cutting corner (13) to 2 mm to 60 mm increasing at the cutting-edge center (14).

3. Tool according to one of claims 1 or 2, characterised in that the maximum height H_{A,B} of the scales (12) measured as a spacing of the apex line (121) from the foot point (124) of a flank (122, 123) lies between 0,01 mm and 0,25 mm, preferably between 0,025 mm and 0,1 mm and/or that the height of the scales (12) increases with increasing distance from the cutting edge (13).

4. Tool according to one of claims 1 to 3, characterised in that the apex lines (121) of the scales (12) extend at a cutting angle of -10° to +30° and/or form with respective perpendiculars to the cutting edge from the cutting corner (13) to the cutting-edge center (14) a decreasing angle of 55° to -5°.

5. Tool according to one of claims 1 to 4, characterised in that the length of the scales (12) increases from the cutting corner (13) to the cutting-edge center (14) or to the next cutting corner along a cutting edge (11) in regions or steadily, whereby the length lies preferably between 0,15 mm 0,8 mm.

6. Tool according to one of claims 1 to 5, characterised in that the flanks (122, 123) of the scales are in cross-section straight, rounded, or concave, preferably with radii of curvature >0,1 mm for steep flanks and >1,5 mm for flat flanks and/or that the flanks (122, 123) of the scales (12) or their tangents extend relative to the cutting edge (11) on the side turned away from the center of curvature of the apex lines under a steeper angle of 45° ± 30° and on the other side under a flatter angle <15°.

7. Tool according to one of claims 1 to 6, characterised in that the transitions between adjacent flanks (122, 123) of the scales (12) at the apex lines (121) is sharp or rounded.

8. Tool according to one of claims 1 to 7, characterised in that in the region of the cutting corners there is a scale (17) extending in the direction of an angle bisector and having an apex (172) with in cross section perpendicular to the angle bisector at least the same height as the apex lines (121) of adjacent scales (12) and whose flank angle is the same, the apex angle (δ) being 130° to 175°, preferably 150° to 170° and/or that the apex angle (δ) of the scale (17) decreases with increasing spacing from the cutting edge (13) either in parts steadily or unsteadily.

9. Tool according to one of claims 1 to 8, characterised in that the scales (12, 17, 23 to 25) extend right to the cutting edge or run out at the cutting edge (11), whereby the scale height drops to 0 mm or that between the cutting edge (11) and the scales (28) there is a land (27) or a chip-forming inlet or the scales are set at a land (31).

10. Tool according to one of claims 1 to 9, characterised in that on a cutting-surface plateau elevated above cutting-surface regions near the cutting edge there are further scales (19) whose length are preferably smaller than the scales (12) near the cutting edge.

11. Tool according to one of the claims 1 to 10, characterised in that the scales are formed generally by locally planar surfaces.

12. Tool according to one of claims 1 to 11, characterised in that near a cutting corner (13) also onto or near a smoothing edge (11a) there is at least one scale (12a) with the same curvature direction as the scales (12) on the main cutting edge and having a curvature directed away from the cutting corner (13), whereby preferably the radius of curvature (R_{PS}) of the scale(s) (12a) on the planing edge (11a) is the same as or bigger than the radii of curvature of the scales (12b) which are near the cutting edge (13) of the main cutting edge (11) and/or the angle (nue_{PS}) of the scale(s) (12a) on the planing edge (11a) is equal to or bigger than the angle of the scales (12b) which are near the cutting edge (13) of the main cutting edge (11).

13. Tool according to claim 12, characterised in that the scale (12a) closest to the cutting corner on the smoothing edge (11a) extends at a spacing (c) from the cutting-edge center measured as the distance of a first vertical extending through the scale end near the smoothing cutting edge (11a) and extends perpendicular thereto, and a second vertical which extends through the contact point (E_{PS}) of the smoothing edge (11a) and the cutting corner (13) perpendicular to the smoothing cutting edge, the spacing (c) lying in the region of minimal tooth advance (f_{zmin}) and the product of the maximum number of teeth and the maximum tooth advance (Zₘₐₓ · f_{zmax}), preferably between 0,03 mm ≤ c ≤ 4 mm.

14. Tool according to one of claims 12 or 13, characterised in that the scale(s) (12a) on the smoothing edge (11a) end at a spacing (d) form the smoothing edge (11a) which is equal to one to four times the smoothing-run error, preferably in the range 0,01 mm ≤ d ≤ 0,5 mm.

15. Boring tool for boring in solid metal with a shaft (32) and on the front end of the shaft (32) at different radial spacings and offset at the same angular distance from one another geometrically similar indexable cutting plates (33) whose working paths overlap, the radially inner indexable cutting plate having its engaged cutting edge slightly overlapping the drill axis (34), characterised in that the radially inner indexable cutting plate has a plurality of groove-like and/or raised ship-forming elements which are arranged along a cutting edge (11) and adjacent in a row and which have an elongated extension with a longitudinal axis defined thereby, the cutting surface has at least near the cutting-edge an imbricated microstructure, and the individual scales (12, 23 to 25) being arranged immediately adjacent one another and have comb-like curved apex lines (121) which form an angle (nᵤₑ) between 55° and -5° towards the cutting edge (11) relative to a perpendicular to the cutting edge on the cutting surface, that the scales (12, 23 to 25) each have parallel to the cutting edge a cross-section which has a steeper flank (122) and a flatter flank (123), and that the flatter flank (123) lies on the side turned toward the center of curvature.

## Revendications

1. Outil pour l'usinage par enlèvement de copeaux de pièces, en particulier insert de coupe, avec une multitude d'éléments en forme de rainure et/ou élevés à former le copeau, qui sont disposés le long du tranchant (11) et à la ligne l'un à côté de l'autre et qui possèdent une extension longitudinale avec un axe longitudinal défini de cette façon, la face de coupe présentant au moins à proximité du tranchant une microstructure à écailles et les écailles individuelles (12, 23 à 25) étant disposées de manière à être directement contiguës l'une à l'autre,
**caractérisé par le fait**
que les écailles (12, 23 à 25) présentent des lignes de sommet (121) courbées, ressemblant à des crêtes, qui, vers le tranchant (11), forment un angle (nᵤₑ) compris entre 55° et -5° avec la normale au tranchant sur la face de coupe, que les écailles (12, 23 à 25) présentent chacune parallèlement au tranchant une section qui présente un flanc plus raide (122) et un flanc plus plat (123), et que le flanc plus plat (123) est situé respectivement du côté tourné vers le centre de courbure.

2. Outil selon la revendication 1, caractérisé par le fait que, pour des inserts de coupe à tourner et à fraiser, les courbures des lignes de sommet (121) sont dirigées dans la direction opposée au coin de coupe (13), ou - pour des inserts de coupe à forer - les courbures sont dirigées vers l'axe de foret, et/ou que les courbures présentent du coin de coupe (13) vers le milieu (14) du tranchant ou vers le coin de coupe suivant des rayons croissants (pour des outils de tournage ou de fraisage) ou des rayons diminuants de coin de coupe en coin de coupe (pour des outils à forer), la courbure de la ligne de sommet (121) de chacune des écailles (12) - au moins dans le cas d'un nombre considérable d'écailles (12) - étant constante sur son extension longitudinale, de préférence, elle est comprise entre 0,1 mm et 12 mm près d'un coin de coupe (13) et augmente jusqu'à 2 mm à 60 mm au milieu (14) du tranchant.

3. Outil selon l'une des revendications 1 ou 2, caractérisé par le fait que la hauteur maximale H_{A, B} des écailles (12), mesurée comme distance de la ligne de sommet (121) au pied (124) d'un flanc (122, 123), est comprise entre 0,01 mm et 0,25 mm, de préférence entre 0,025 mm et 0,1 mm, et/ou que la hauteur des écailles (12) augmente avec une distance croissante du tranchant (11).

4. Outil selon l'une des revendications 1 à 3, caractérisé par le fait que les lignes de sommet (121) des écailles (12) s'étendent sous un angle de coupe de -10° à +30° et/ou forment avec des normales respectives au tranchant, du coin de coupe (13) vers le milieu (14) du tranchant, des angles diminuants de 55° à -5°.

5. Outil selon l'une des revendications 1 à 4, caractérisé par le fait que la longueur des écailles (12) augmente dans des régions ou constamment du coin de coupe (13) vers le milieu (14) du tranchant ou vers le coin de coupe suivant le long d'un tranchant (11), de préférence, la longueur étant comprise entre 0,15 mm et 8 mm.

6. Outil selon l'une des revendications 1 à 5, caractérisé par le fait que, en coupe transversale, les flancs (122, 123) des écailles sont droits, bombés ou concaves, de préférence avec des rayons de courbure >0,1 mm pour des flancs raides et >1 ,5 mm pour des flancs plats, et/ou que les flancs (122, 123) des écailles (12) ou leur tangente s'étendent, par rapport au tranchant (11), du côté détournés des centres de courbure des lignes de sommet sous un angle plus raide de 45° ± 30° et, du côté opposé, sous un angle plus plat <15°.

7. Outil selon l'une des revendications 1 à 6, caractérisé par le fait que, sur la ligne de sommet (121), les transitions des flancs adjacents (122, 123) des écailles (12) présentent de vives arêtes ou sont arrondies.

8. Outil selon l'une des revendications 1 à 7, caractérisé par le fait qu'une écaille (17) s'étendant dans la direction de la bissectrice est disposée dans la zone du coin de coupe, dont le sommet (172), en coupe transversale, perpendiculairement à la bissectrice, présente du moins la même hauteur que les lignes de sommet (121) d'écailles voisines (12) et dont les angles de flanc présentent la même mesure, son angle de toit (δ) étant compris entre 130° et 175°, de préférence entre 150° et 170°, et/ou que l'angle de toit (δ) de l'écaille (17) diminue constamment dans des régions ou inconstamment avec une distance croissante du coin de coupe (13).

9. Outil selon l'une des revendications 1 à 8, caractérisé par le fait que les écailles (12, 17, 23 à 25) s'étendent jusqu'au tranchant ou se terminent dans le tranchant (11), la hauteur des écailles diminuant jusqu'à être 0 mm, ou qu'un chanfrein (27) ou une entrée à former le copeau est prévu(e) entre le tranchant (11) et les écailles (28) ou que les écailles sont disposées dans la zone d'un chanfrein (31).

10. Outil selon l'une des revendications 1 à 9, caractérisé par le fait que d'autres écailles (29) sont disposées sur un plateau de la face de coupe, qui est élevé au-dessus de la zone de la face de coupe, située près du tranchant, la longueur de ces écailles est de préférence plus petite que celle des écailles (12) situées près du tranchant.

11. Outil selon l'une des revendications 1 à 10, caractérisé par le fait que les écailles se composent pour l'essentiel de surfaces localement planes.

12. Outil selon l'une des revendications 1 à 11, caractérisé par le fait que, près d'un coin de coupe (13) également sur ou adjacente à l'arête de planage (11a), il y a du moins une écaille (12a) qui a la même direction de courbure que celle des écailles (12) sur le tranchant principal (11) et dont les courbures sont dirigées dans la direction opposée au coin de coupe (13), de préférence, le rayon de courbure (R_{PS}) de l'écaille (des écailles) (12a) sur l'arête de planage (11a) étant égal ou supérieur aux rayons de courbure des écailles (12b) qui se trouvent près du coin de coupe (13) sur le tranchant principal (11) et/ou l'angle (nue_{PS}) de l'écaille (des écailles) (12a) sur l'arête de planage (11a) étant égal ou inférieur aux angles des écailles (12b) qui se trouvent près du coin de coupe (13) sur le tranchant principal (11).

13. Outil selon la revendication 12, caractérisé par le fait que l'écaille (12a) située le plus près du coin de coupe sur l'arête de planage (11a) se termine à une distance (c) à proximité du tranchant, mesurée en tant que distance d'une première verticale qui s'étend a travers le point ou se termine l'écaille près de l'arête de planage (11a), et verticalement à cela, et une deuxième verticale qui s'étend à travers le point de contact (E_{PS}) de l'arête de planage (11a) et du coin de coupe (13) verticalement à l'arête de planage, la distance (c) étant située dans le domaine de l'avance minimale de la dent (f_{zmin}) et du produit du nombre maximal de dents et de l'avance maximale de la dent (zₘₐₓ . f_{zmax}), de préférence entre 0,03 mm ≤ c ≤ 4 mm.

14. Outil selon l'une des revendications 12 ou 13, caractérisé par le fait que l'écaille (les écailles) (12a) sur l'arête de planage (11a) se termine(nt) à une distance (d) de l'arête de planage (11a), qui est de une à quatre fois plus grande que le défaut de de la marche de planage, de préférence située dans le domaine 0,01 mm ≤ d ≤ 0,5 mm.

15. Outil à forer pour des forages dans du matériau solide métallique, avec une tige (32) et plusieurs plaquettes réversibles (33) géométriquement similaires, disposées sur le front de la tige (32) à des distances radiales différentes et décalées l'une contre l'autre de mêmes angles péripheriques, dont les zones de travail se recouvrent, la plaquette réversible radialement intérieure dépassant avec l'un de ses tranchants en prise légèrement l'axe (34) du foret, caractérisé par le fait que la plaquette réversible radialement intérieure est pourvue d'une multitude d'éléments en forme de rainure et/ou élevés à former le copeau, qui sont disposés le long du tranchant (11) et à la ligne l'un à côté de l'autre et qui possèdent une extension longitudinale avec un axe longitudinal défini de cette façon, la face de coupe présentant au moins à proximité du tranchant une microstructure à écailles et les écailles individuelles (12, 23 à 25) étant disposées de manière à être directement contiguës l'une à l'autre et présentant des lignes de sommet (121) courbées, ressemblant à des crêtes, qui, vers le tranchant (11), forment un angle (nᵤₑ) compris entre 55° et -5° avec la normale au tranchant sur la face de coupe, les écailles présentant chacune parallèlement au tranchant (11) une section qui présente un flanc plus raide (122) et un flanc plus plat (123), et le flanc plus plat (123) est situé respectivement du côté tourné vers le centre de courbure.
